# EUROPEAN PATENT APPLICATION

(11) **EP 2 857 992 A1**
(43) Date of publication of application: **08.04.2015**
(21) Application number: 13881196.3
(22) Date of filing: 27.09.2013
(51) Int. Cl.: G06F 17/30, H04L 12/24

(54) **ONLINE DATA PROCESSING METHOD, DEVICE AND SYSTEM**

(30) Priority: 01.04.2013 CN 201310111060
(71) Applicant: Huawei Technologies Co., Ltd., Longgang District Shenzhen, Guangdong 518129 (CN)
(72) Inventor: CHEN, Fei, Shenzhen Guangdong 518129 (CN); QIU, Heng, Shenzhen Guangdong 518129 (CN); GUPTA, Puneet, Shenzhen Guangdong 518129 (CN)
(74) Representative: Pfenning, Meinig & Partner GbR
(86) International application number: PCT/CN2013/084374
(87) International publication number: WO 2014/161281

(57) **Abstract**

Embodiments of the present invention provide a method, a device and a system for online processing of data. The method includes: sending a data request message to at least one sub online analytical processing OLAP server; receiving user service data information sent by the at least one sub OLAP server, where the user service data information includes service volume information of one roaming user or roaming users and service volume information of one non-roaming user or non-roaming users meeting a first condition parameter, and the service volume information includes user identifiers and corresponding service volumes; and summing up service volumes based on the user identifiers and the corresponding service volumes to obtain total service volume information of each of one or more users having a sum of service volumes that meets a second condition parameter among the sums of service volumes that are corresponding to the user identifiers, where the total service volume information includes the user identifier of each of the one or more users and a corresponding sum of service volumes. The method, device and system for online processing of data provided in the embodiments of the present invention can improve the efficiency of online processing of data.

## Description

### TECHNICAL FIELD

The present invention relates to a data processing technology, and in particular, to a method, a device and a system for online processing of data.

### BACKGROUND

With the rapid development of network technologies and increasing popularity of networks, subnets of operators are more widely distributed, for example, subnets of one operator may be distributed in different geographic areas nationwide. Generally, an online analytical processing (On-Line Transaction Processing, OLAP for short) server is deployed on each subnet of the operator, so as to obtain a service volume of each subnet.

In the prior art, in order to obtain a central report according to the service volume of each subnet, generally the OLAP server on each subset obtains a service volume of each user, then service volume data of all users in the OLAP server is exported manually as a comma separated value (Comma Separated value, CSV) file, then the CSV file is imported manually into a separate database, and service volume data of all users in the separate database is aggregated to generate a central report.

However, the processing manner of aggregating the service volume data of all the users in the separate database to generate a central report in the prior art involves a large amount of data processing, and has a low efficiency.

### SUMMARY

Embodiments of the present invention provide a method, a device and a system for online processing of data, so as to improve the efficiency of online processing of data.

According to a first aspect, an embodiment of the present invention provides a method for online processing of data, including:
sending a data request message to at least one sub online analytical processing OLAP server;
receiving user service data information sent by the at least one sub OLAP server, where the user service data information includes service volume information of one or more roaming users and service volume information of one or more non-roaming users meeting a first condition parameter, and the service volume information includes user identifiers and corresponding service volumes; and
summing up service volumes based on the user identifiers and the corresponding service volumes to obtain total service volume information of each of one or more users having a sum of service volumes that meets a second condition parameter among the sums of service volumes that are corresponding to the user identifiers, where the total service volume information includes the user identifier of each of the one or more users and a corresponding sum of service volumes.

With reference to the first aspect, in a first possible implementation manner of the first aspect, the summing up service volumes based on the user identifiers and the corresponding service volumes to obtain total service volume information of each of one or more users having a sum of service volumes that meets a second condition parameter among the sums of service volumes that are corresponding to the user identifiers includes:
collecting, based on the user identifier and the corresponding service volume, statistics on a sum of service volumes of each of the users corresponding to the user identifiers as a roaming user and a non-roaming user; and
determining, according to the sum of service volumes of each of the users, the total service volume information of each of the one or more users having a sum of service volumes that meets the second condition parameter.

With reference to the first possible implementation manner of the first aspect, in a second possible implementation manner of the first aspect, a data reporting parameter is carried in the data request message, where the data reporting parameter includes any one or a combination of the following: a statistics-required service type parameter, a statistical time segment parameter, and the first condition parameter.

With reference to the first aspect or any one of the first and second possible implementation manners of the first aspect, in a third possible implementation manner of the first aspect, the first condition parameter is a condition parameter that a service volume is greater than a first preset threshold, or a condition parameter that a service volume ranks before a first preset ranking in service volumes of all non-roaming users; and
the second condition parameter is a condition parameter that a sum of service volumes is greater than a second preset threshold, or a condition parameter that a sum of service volumes ranks before a second preset ranking in sums of service volumes of all users.

With reference to the first aspect or any one of the first to third possible implementation manners of the first aspect, in a fourth possible implementation manner of the first aspect, after the summing up service volumes based on the user identifiers and the corresponding service volumes to obtain total service volume information of each of one or more users having a sum of service volumes that meets a second condition parameter among the sums of service volumes that are corresponding to the user identifiers, the method further includes:
generating a multi-dimensional service volume graph according to the total service volume information of each of one or more users having a sum of service volumes that meets the second condition parameter.

With reference to the first aspect or any one of the first to fourth possible implementation manners of the first aspect, in a fifth possible implementation manner of the first aspect, sub online analytical processing OLAP servers are disposed in different geographic areas.

According to a second aspect, an embodiment of the present invention provides a method for online processing of data, including: receiving a data request message sent by a central online analytical processing OLAP server, and obtaining a data reporting parameter associated with the data request message;
collecting, according to the data reporting parameter, statistics on service volumes of one or more roaming users and one or more non-roaming users to obtain user service data information, where the user service data information includes service volume information of the roaming users and service volume information of one or more non-roaming users meeting a first condition parameter, and the service volume information includes user identifiers and corresponding service volumes; and
sending the user service data information to the central OLAP server, so that the central OLAP server sums up service volumes based on the user identifiers and the corresponding service volumes to obtain total service volume information of each of one or more users having a sum of service volumes that meets a second condition parameter among the sums of service volumes that are corresponding to the user identifiers, where the total service volume information includes the user identifier of each of the one or more users and a corresponding sum of service volumes.

With reference to the second aspect, in a first possible implementation manner of the second aspect, before the collecting, according to the data reporting parameter, statistics on service volumes of one or more roaming users and one or more non-roaming users to obtain user service data information, the method further includes:
receiving at least one piece of user service volume information sent by a deep packet inspection device, where each piece of the user service volume information includes a user identifier of a user, a single service volume of the user, a home location identifier of the user, and an identifier of a geographic area in which the single service volume is generated; and
the collecting, according to the data reporting parameter, statistics on service volumes of one or more roaming users and one or more non-roaming users to obtain user service data information includes:
   if the home location identifier of the user is different from the identifier of the geographic area in which the single service volume is generated, determining that the user is a roaming user, and collecting, according to the data reporting parameter, statistics on single service volumes in all the user service volume information that includes the user identifier to obtain service volume information of the roaming user; and
   if the home location identifier of the user is the same as the identifier of the geographic area in which the single service volume is generated, determining that the user is a non-roaming user, and collecting, according to the data reporting parameter, statistics on single service volumes in all the user service volume information that includes the user identifier to obtain a service volume of the non-roaming user; and determining, according to service volumes of all non-roaming users, service volume information of the one or more non-roaming users meeting the first condition parameter.

With reference to the second aspect, in a second possible implementation manner of the second aspect, the data reporting parameter includes any one or a combination of the following: a statistics-required service type parameter, a statistical time segment parameter, and the first condition parameter;
if the data reporting parameter includes the statistics-required service type parameter, the collecting, according to the data reporting parameter, statistics on service volumes of one or more roaming users and one or more non-roaming users to obtain user service data information includes: collecting statistics on service volumes that are corresponding to the statistics-required service type parameter and that are of the roaming users and the non-roaming users to obtain the user service data information; and
if the data reporting parameter includes the statistical time segment parameter, the collecting, according to the data reporting parameter, statistics on service volumes of one or more roaming users and one or more non-roaming users to obtain user service data information includes: collecting statistics on service volumes that are corresponding to the statistical time segment parameter and that are of the roaming users and the non-roaming users to obtain the user service data information.

With reference to the second aspect or any one of the first and second possible implementation manners of the second aspect, in a third possible implementation manner of the second aspect, the first condition parameter is a condition parameter that a service volume is greater than a first preset threshold, or a condition parameter that a service volume ranks before a first preset ranking in service volumes of all non-roaming users; and
the second condition parameter is a condition parameter that a sum of service volumes is greater than a second preset threshold, or a condition parameter that a sum of service volumes ranks before a second preset ranking in sums of service volumes of all users.

With reference to the second aspect or any one of the first to third implementation manners of the second aspect, in a fourth possible implementation manner of the second aspect, the obtaining a data reporting parameter associated with the data request message includes:
obtaining, according to a predetermined mapping relationship between the data request message and the data reporting parameter, the data reporting parameter associated with the data request message;
or, if the data request message carries a data reporting parameter, the obtaining a data reporting parameter associated with the data request message includes:
   extracting the carried data reporting parameter from the data request message.

According to a third aspect, an embodiment of the present invention provides a central online analytical processing server, including:
a sending module, configured to send a data request message to at least one sub online analytical processing OLAP server;
a receiving module, configured to receive user service data information sent by the at least one sub OLAP server, where the user service data information includes service volume information of one or more roaming users and service volume information of one or more non-roaming users meeting a first condition parameter, and the service volume information includes user identifiers and corresponding service volumes; and
a processing module, configured to sum up service volumes based on the user identifiers and the corresponding service volumes to obtain total service volume information of each of one or more users having a sum of service volumes that meets a second condition parameter among the sums of service volumes that are corresponding to the user identifiers, where the total service volume information includes the user identifier of each of the one or more users and a corresponding sum of service volumes.

With reference to the third aspect, in a first possible implementation manner of the third aspect, the processing module is specifically configured to:
collect, based on the user identifiers and the corresponding service volumes, statistics on a sum of service volumes of each of the users corresponding to the user identifiers as a roaming user and a non-roaming user; and
determine, according to the sum of service volumes of each of the users, the total service volume information of each of the one or more users having a sum of service volumes that meets the second condition parameter.

With reference to the first possible implementation manner of the third aspect, in a second possible implementation manner of the third aspect, the sending module is specifically configured to send a data request message that carries a data reporting parameter to the at least one sub OLAP server, where the data reporting parameter includes any one or a combination of the following: a statistics-required service type parameter, a statistical time segment parameter, and the first condition parameter.

With reference to the third aspect or any one of the first and second possible implementation manners of the third aspect, in a third possible implementation manner of the third aspect, the processing module is further configured to generate a multi-dimensional service volume graph according to the total service volume information of each of one or more users having a sum of service volumes that meets the second condition parameter.

According to a fourth aspect, an embodiment of the present invention provides a sub online analytical processing server, including:
a receiving module, configured to receive a data request message sent by a central online analytical processing OLAP server, and obtain a data reporting parameter associated with the data request message;
a processing module, configured to collect, according to the data reporting parameter, statistics on service volumes of one or more roaming users and one or more non-roaming users to obtain user service data information, where the user service data information includes service volume information of the roaming users and service volume information of one or more non-roaming users meeting a first condition parameter, and the service volume information includes user identifiers and corresponding service volumes; and
a sending module, configured to send the user service data information to the central OLAP server, so that the central OLAP server sums up service volumes based on the user identifiers and the corresponding service volumes to obtain total service volume information of each of one or more users having a sum of service volumes that meets a second condition parameter among the sums of service volumes that are corresponding to the user identifiers, where the total service volume information includes the user identifier of each of the one or more users and a corresponding sum of service volumes.

With reference to the fourth aspect, in a first possible implementation manner of the fourth aspect, receive at least one piece of user service volume information sent by a deep packet inspection device, where each piece of the user service volume information includes a user identifier of a user, a single service volume of the user, a home location identifier of the user, and an identifier of a geographic area in which the single service volume is generated; and
the processing module is specifically configured to:
if the home location identifier of the user is different from the identifier of the geographic area in which the single service volume is generated, determine that the user is a roaming user, and collect, according to the data reporting parameter, statistics on single service volumes in all the user service volume information that includes the user identifier to obtain service volume information of the roaming user; and
if the home location identifier of the user is the same as the identifier of the geographic area in which the single service volume is generated, determine that the user is a non-roaming user, and collect, according to the data reporting parameter, statistics on single service volumes in all the user service volume information that includes the user identifier to obtain a service volume of the non-roaming user; and determine, according to service volumes of all non-roaming users, service volume information of the one or more non-roaming users meeting the first condition parameter.

With reference to the fourth aspect, in a second possible implementation manner of the fourth aspect, the data reporting parameter includes any one or a combination of the following: a statistics-required service type parameter, a statistical time segment parameter, and the first condition parameter; and the processing module is specifically configured to: if the data reporting parameter includes the statistics-required service type parameter, collect statistics on service volumes that are corresponding to the statistics-required service type parameter and that are of the roaming users and the non-roaming users to obtain user service data information, where the user service data information includes service volume information of the roaming users and service volume information of one or more non-roaming users meeting the first condition parameter, and the service volume information includes user identifiers and corresponding service volumes;or, is specifically configured to: if the data reporting parameter includes the statistical time segment parameter, collect statistics on service volumes that are corresponding to the statistical time segment parameter and that are of the roaming users and the non-roaming users to obtain user service data information, where the user service data information includes service volume information of the roaming users and service volume information of one or more non-roaming users meeting the first condition parameter, and the service volume information includes user identifiers and corresponding service volumes.

With reference to the fourth aspect or any one of the first and second possible implementation manners of the fourth aspect, in a third possible implementation manner of the fourth aspect, the receiving module is specifically configured to receive the data request message sent by the central online analytical processing OLAP server, and obtain, according to a predetermined mapping relationship between the data request message and the data reporting parameter, the data reporting parameter associated with the data request message; or, is specifically configured to: receive the data request message sent by the central online analytical processing OLAP server, and if the data request message carries a data reporting parameter, extract the carried data reporting parameter from the data request message.

According to a fifth aspect, an embodiment of the present invention provides a system for online processing of data, including a central online analytical processing OLAP server and at least one sub online analytical processing OLAP server, where:
the central OLAP server is configured to: send a data request message to the at least one sub OLAP server; receive user service data information sent by the at least one sub OLAP server, where the user service data information includes service volume information of one or more roaming users and service volume information of one or more non-roaming users meeting a first condition parameter, and the service volume information includes user identifiers and corresponding service volumes; and sum up service volumes based on the user identifiers and the corresponding service volumes to obtain total service volume information of each of one or more users having a sum of service volumes that meets a second condition parameter among the sums of service volumes that are corresponding to the user identifiers, where the total service volume information includes the user identifier of each of the one or more users and a corresponding sum of service volumes; and
the sub OLAP server is configured to: receive a data request message sent by the central OLAP server, and obtain a data reporting parameter corresponding to the data request message; collect, according to the data reporting parameter, statistics on service volumes of one or more roaming users and one or more non-roaming users to obtain user service data information; and send the user service data information to the central OLAP server, where the user service data information includes service volume information of the roaming users and service volume information of one or more non-roaming users meeting the first condition parameter, and the service volume information includes user identifiers and corresponding service volumes.

With reference to the fifth aspect, in a first possible implementation manner of the fifth aspect, the central OLAP server is specifically configured to:
send a data request message to the at least one sub OLAP server; receive user service data information sent by the at least one sub OLAP server, where the user service data information includes service volume information of one or more roaming users and service volume information of one or more non-roaming users meeting the first condition parameter, and the service volume information includes user identifiers and corresponding service volumes;
collect, based on the user identifiers and the corresponding service volumes, statistics on a sum of service volumes of each of the users corresponding to the user identifiers as a roaming user and a non-roaming user; and
determine, according to the sum of service volumes of each of the users, the total service volume information of each of the one or more users having a sum of service volumes that meets the second condition parameter, where the total service volume information includes the user identifier of each of the one or more users and a corresponding sum of service volumes.

With reference to the fifth aspect, in a second possible implementation manner of the fifth aspect, the sub OLAP server is specifically configured to:
receive a data request message sent by the central OLAP server;
obtain, according to a predetermined mapping relationship between the data request message and the data reporting parameter, the data reporting parameter associated with the data request message;
or, if the data request message carries a data reporting parameter, extract the carried data reporting parameter from the data request message;
receive at least one piece of user service volume information sent by a deep packet inspection device, where each piece of the user service volume information includes a user identifier of a user, a single service volume of the user, a home location identifier of the user, and an identifier of a geographic area in which the single service volume is generated;
if the home location identifier of the user is different from the identifier of the geographic area in which the single service volume is generated, determine that the user is a roaming user, and collect, according to the data reporting parameter, statistics on single service volumes in all the user service volume information that includes the user identifier to obtain service volume information of the roaming user, where the service volume information includes user identifiers and corresponding service volumes;
if the home location identifier of the user is the same as the identifier of the geographic area in which the single service volume is generated, determine that the user is a non-roaming user, and collect, according to the data reporting parameter, statistics on single service volumes in all the user service volume information that includes the user identifier to obtain a service volume of the non-roaming user; and determine, according to service volumes of all non-roaming users, service volume information of the one or more non-roaming users meeting the first condition parameter, where the service volume information includes user identifiers and corresponding service volumes; and
send the user service data information to the central OLAP server, so that the central OLAP server sums up service volumes based on the user identifiers and the corresponding service volumes to obtain the total service volume information of a user corresponding to the user identifier and having a sum of service volumes that meets the second condition parameter, where the total service volume information includes the user identifier of each of the one or more users and a corresponding sum of service volumes.

With reference to the fifth aspect, in a third possible implementation manner of the fifth aspect, the sub OLAP server is specifically configured to:
receive a data request message sent by the central OLAP server;
obtain, according to a predetermined mapping relationship between the data request message and the data reporting parameter, the data reporting parameter associated with the data request message;
or, if the data request message carries a data reporting parameter, extract the carried data reporting parameter from the data request message; where
the data reporting parameter includes any one or a combination of the following: a statistics-required service type parameter, a statistical time segment parameter, and the first condition parameter;
if the data reporting parameter includes the statistics-required service type parameter, collect statistics on service volumes that are corresponding to the statistics-required service type parameter and that are of the roaming users and the non-roaming users to obtain user service data information, where the user service data information includes service volume information of the roaming users and service volume information of one or more non-roaming users meeting the first condition parameter, and the service volume information includes user identifiers and corresponding service volumes; or,
if the data reporting parameter includes the statistical time segment parameter, collect statistics on service volumes that are corresponding to the statistical time segment parameter and that are of the roaming users and the non-roaming users to obtain user service data information, where the user service data information includes service volume information of the roaming users and service volume information of one or more non-roaming users meeting the first condition parameter, and the service volume information includes user identifiers and corresponding service volumes; and
send the user service data information to the central OLAP server, so that the central OLAP server sums up service volumes based on the user identifiers and the corresponding service volumes to obtain total service volume information of a user corresponding to the user identifier and having a sum of service volumes that meets the second condition parameter, where the total service volume information includes the user identifier of each of the one or more users and a corresponding sum of service volumes.

Embodiments of the present invention provide a method, a device and a system for online processing of data. A central OLAP server sends a data request message to at least one sub OLAP server; the central OLAP server receives user service data information sent by the at least one sub OLAP server, where the user service data information includes service volume information of one or more roaming users and service volume information of one or more non-roaming users meeting a first condition parameter, that is, the sub OLAP server screens non-roaming users, and the central OLAP server receives service volume information of only a part of non-roaming users; and the central OLAP server sums up service volumes according to users to obtain total service volume information of a users having a sum of service volumes that meets a second condition parameter, where the central OLAP server only needs to sum up service volumes that are of the roaming users and are reported by the sub OLAP server, and service volumes that are of the non-roaming users meeting the first condition parameter and are reported by the sub OLAP server, that is, the sub OLAP server first collects statistics preliminarily, and then the central OLAP server further collects statistics based on a preliminary statistical result of the sub OLAP server, thereby reducing the amount of data processed by the central OLAP server, and improving the efficiency of data processing.

### BRIEF DESCRIPTION OF DRAWINGS

To describe the technical solutions in the embodiments of the present invention or the prior art more clearly, the following briefly introduces accompanying drawings required for describing the embodiments or the prior art. Apparently, the accompanying drawings in the following description show some embodiments of the present invention, and persons of ordinary skill in the art may still derive other drawings according to these accompanying drawings without creative efforts.
FIG. 1 is a flowchart of Embodiment 1 of a method for online processing of data of the present invention;
FIG. 2 is a flowchart of Embodiment 2 of a method for online processing of data of the present invention;
FIG. 3 is a flowchart of Embodiment 3 of a method for online processing of data of the present invention;
FIG. 4 is a flowchart of Embodiment 4 of a method for online processing of data of the present invention;
FIG. 5 is a schematic structural diagram of Embodiment 1 of a central online analytical processing server of the present invention;
FIG. 6 is a schematic structural diagram of Embodiment 1 of a sub online analytical processing server of the present invention;
FIG. 7 is a schematic structural diagram of Embodiment 2 of a central online analytical processing server of the present invention;
FIG. 8 is a schematic structural diagram of Embodiment 2 of a sub online analytical processing server of the present invention;
FIG. 9 is a schematic structural diagram of Embodiment 1 of a system for online processing of data of the present invention; and
FIG. 10 is a schematic diagram of an application of a system for online processing of data of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the embodiments to be described are a part rather than all of the embodiments of the present invention. All other embodiments obtained by persons of ordinary skill in the art based on the embodiments of the present invention without creative efforts shall fall within the protection scope of the present invention.

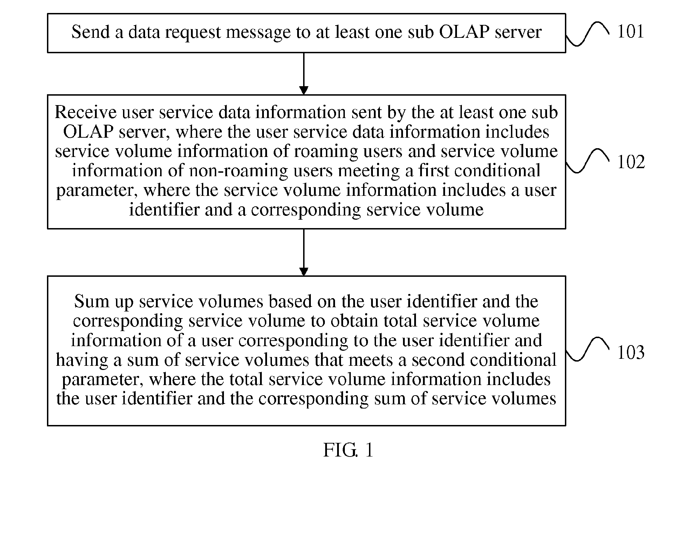

FIG. 1 is a flowchart of Embodiment 1 of a method for online processing of data of the present invention. This embodiment is executed by a central online analytical processing (On-Line Transaction Processing, OLAP for short) server, where the central online analytical processing server may be implemented by using software and/or hardware. As shown in FIG. 1, the method of this embodiment may include:

Step 101. Send a data request message to at least one sub OLAP server.

When a decision maker of an operator needs to know an actual operating situation of a network and make a related decision according to the operating situation, a query request may be triggered to the central OLAP server, where the query request may carry a data parameter on which the central OLAP server needs to collect statistics, that is, a data statistics parameter. The data statistics parameter(s) generally may include any one or a combination of a statistics-required service type parameter, a statistical time segment parameter, and a first condition parameter. The data statistics parameter(s) may be carried by the query request, or may be a preset default parameter, or all parameters may be determined according to a mapping relationship between a part of parameters carried in the query request and a part of preset parameters and other parameters. For example, the data statistics parameter carried in the query request is a statistics-required service type parameter, the part of preset parameters are statistical time segment parameters, and accordingly the central OLAP server may determine the statistical time segment parameters according to a mapping relationship between the statistics-required service type parameter and the statistical time segment parameters. After receiving the query request, the central OLAP server sends a data request message to at least one sub OLAP server, so that the sub OLAP server collects statistics on data, and reports user service data information obtained by collecting statistics to the central OLAP server. Persons skilled in the art may understand that the data request message may carry a data reporting parameter, or may not carry a data reporting parameter, and the data reporting parameter may be the same as the data statistics parameter, or may be different from the data statistics parameter. Persons skilled in the art may understand that collecting statistics in this embodiment includes activities such as collection, collation, computation and analysis of related data.

The sub OLAP server may collect statistics on data according to the data reporting parameter. In a specific implementation process, the sub OLAP server first obtains a data reporting parameter associated with the data request message, which may specifically be implemented in the following two manners: One possible implementation manner is to obtain, according to a predetermined mapping relationship between the data request message and the data reporting parameter, the data reporting parameter associated with the data request message, that is, after receiving the data request message, the sub OLAP server obtains the data reporting parameter according to the mapping relationship. The other possible implementation manner is: if the data request message carries a data reporting parameter, extracting the carried data reporting parameter from the data request message.

Persons skilled in the art may understand that the data request message may further carry a part of data reporting parameters, and the sub OLAP server determines all data reporting parameters according to a predetermined mapping relationship between the data request message and another part of data reporting parameters.

Herein, the data reporting parameter includes any one or a combination of the following: a statistics-required service type parameter, a statistical time segment parameter, and a first condition parameter. Herein, the statistics-required service type parameter may include a traffic service, a video service, a voice service, and the like; the statistical time segment parameter includes a start point and an end point of a statistical time, for example, from 7 p.m. to 9 p.m. on December 18, 2012, and a specific statistical time segment parameter is not particularly limited herein in this embodiment; and the first condition parameter may be a specific condition parameter met by a service volume of each non-roaming user that is returned by the sub OLAP server to the central OLAP server. In this embodiment, the data reporting parameter is carried in the data request message, so that the central OLAP server can manage data statistics in a unified manner, and the sub OLAP server does not need to store the data reporting parameter, thereby reducing the amount of data stored in each sub OLAP server.

Step 102. Receive user service data information sent by the at least one sub OLAP server, where the user service data information includes service volume information of one or more roaming users and service volume information of one or more non-roaming users meeting the first condition parameter, and the service volume information includes user identifiers and corresponding service volumes.

In a specific application process, sub OLAP servers may be distributed in subnets that are deployed by the operator in different geographic areas, the subnets may be in unit of cities, and a user may be a user using a mobile terminal. After collecting statistics on service volume information of a user according to the data request message, each sub OLAP server sends user service data information to the central OLAP server. The central OLAP server receives the user service data information sent by the at least one sub OLAP server. Herein, the user identifier may be various identifiers of the mobile terminal, for example, an international mobile subscriber identity or a mobile phone number, and the service volume is a service volume corresponding to the user identifier.

The user service data information is described in detail by using an example that the sub OLAP server is located in Guangzhou, the statistics-required service type parameter is a traffic service, the statistical time segment parameter is the third quarter, and the first condition parameter is a condition parameter with traffic greater than a first preset threshold. The user service data information includes: traffic information of the roaming user, for example, traffic information of traffic generated when a user whose home location is Shenzhen roams to Guangzhou in the third quarter and uses the traffic service in Guangzhou as a roaming user. Persons skilled in the art may understand that in a specific implementation process, traffic information of traffic generated by each user who roams to Guangzhou and uses the traffic service in Guangzhou is traffic information of a roaming user.

The user service data information further includes the service volume information of the non-roaming users that meets the first condition parameter, that is, traffic information of traffic generated by a user whose home location is Guangzhou and who uses the traffic service locally in Guangzhou. However, because there are a relatively large number of users whose home locations are Guangzhou, and some users use the traffic service in the third quarter at relatively low frequency or little traffic is generated, a statistical result obtained by collecting statistics on these users does not contribute much to helping the operator know an actual operating situation of a network. In addition, a large amount of data also increases the processing burden of the central OLAP server. Therefore, the sub OLAP server screens non-roaming users to obtain non-roaming users meeting the first condition parameter, for example, when traffic of a non-roaming user is greater than the first preset threshold, the non-roaming user is a roaming user that meets the first condition parameter.

In addition to the first condition parameter described above, the first condition parameter may also be a condition parameter that a service volume ranks before a first preset ranking in service volumes of all non-roaming users. For example, when the first preset ranking is 1000, non-roaming users whose total traffic in the third quarter ranks top 1000 are non-roaming users meeting the first condition parameter.

Persons skilled in the art may understand that service volume statistical information received by the central OLAP server is service volume statistical information sent by multiple sub OLAP servers, and the service volume statistical information sent by each sub OLAP server is similar to that in the foregoing embodiment in which the sub OLAP server is located in Guangzhou, and examples are not repeatedly described herein in this embodiment.

Step 103. Sum up service volumes based on the user identifiers and the corresponding service volumes to obtain each of one or more users having a sum of service volumes that meets a second condition parameter among the sums of service volumes that are corresponding to the user identifiers, where the total service volume information includes the user identifier of each of the one or more users and a corresponding sum of service volumes.

After receiving the user service data information sent by the at least one sub OLAP server, the central OLAP server sums up service volumes on service volumes of each user based on the user identifier to obtain a sum of service volumes of each user, and further obtains total service volume information of each user meeting the second condition parameter.

Persons skilled in the art may understand that within the statistical time segment parameter, when a user not only uses a service at the home location but also uses the service in multiple other geographic areas to which the user roams, the central OLAP server receives service volume information that is of the user as a roaming user and is separately sent by multiple sub OLAP servers corresponding to the multiple geographic areas to which the user roams. Meanwhile, the central OLAP server also receives service volume information that is of the user as a non-roaming user and is sent by a sub OLAP server corresponding to the home location of the user. Therefore, if it is required to obtain a corresponding statistical time segment parameter of the user, that is, information about a total service volume that occurs within a statistical time segment, statistics may be collected on a sum of service volumes of the user as a roaming user and a non-roaming user based on the user identifier of the user, that is, all service volumes corresponding to a same user identifier may be summed up, so as to obtain a total service volume of the user.

Within the statistical time segment, for a user who does not roam to another geographic area to use a service, when service volumes are summed up based on the user identifier of the user, the sum of service volumes of the user is a service volume of the user as a non-roaming user.

After the sum of service volumes of each user is obtained, the total service volume information of each user having a sum of service volumes that meets the second condition parameter is determined according to the sum of service volumes of each user. Herein, the second condition parameter may be a preset second condition parameter, or may be a second condition parameter carried in the query request when the operator triggers the query request. A specific manner of obtaining the second condition parameter is not particularly limited herein in this embodiment.

In a possible implementation manner, the second condition parameter is a condition parameter that a sum of service volumes is greater than a second preset threshold, or a condition parameter that a sum of service volumes ranks before a second preset ranking in sums of service volumes of all users. Specifically, the central OLAP server further screens the users. Assuming that the statistics-required service type parameter is a traffic service parameter, when a sum of traffic of a user is greater than the second preset threshold, or a sum of traffic of the user ranks before the second preset ranking, the user is a user meeting the second condition parameter, and total service volume information of the user meeting the second condition parameter is stored and recorded, where the total service volume information includes the user identifier of each of the one or more users and a corresponding sum of service volumes.

In the method for online processing of data provided in the embodiment of the present invention, a central OLAP server sends a data request message to at least one sub OLAP server, and the central OLAP server receives user service data information sent by the at least one sub OLAP server, where the user service data information includes service volume information of one or more roaming users and service volume information of one or more non-roaming users who meet a first condition parameter, that is, the sub OLAP server screens the non-roaming users, and the central OLAP server only receives service volume information of a part of the non-roaming users; and the central OLAP server sums up service volumes according to users to obtain total service volume information of all users having a sum of service volumes that meets a second condition parameter, where the central OLAP server only needs to sum up service volumes of the roaming users and service volumes of the non-roaming users meeting the first condition parameter, where the service volumes are reported by the sub OLAP server, that is, the sub OLAP server first collects statistics preliminarily, and then the central OLAP server further collects statistics based on a preliminary statistical result of the sub OLAP server, thereby reducing the amount of data processed by the central OLAP server, and improving the efficiency of data processing.

Further, in the foregoing embodiment shown in FIG. 1, after the summing up, by the central OLAP server, service volumes based on the user identifiers and the corresponding service volumes to obtain total service volume information of each of one or more users having a sum of service volumes that meets a second condition parameter among the sums of service volumes that are corresponding to the user identifiers, the method further includes:
generating a multi-dimensional service volume graph according to the total service volume information of each of one or more users having a sum of service volumes that meets the second condition parameter.

In a specific implementation process, the central OLAP server may generate the multi-dimensional service volume graph according to the total service volume information of each of one or more users having a sum of service volumes that meets the second condition parameter by following a multi-aspect thinking pattern of the decision maker, where a dimension refers to an aspect of analysis. For example, the statistical time segment parameter is a dimension, and the service type parameter and the user identifier are also dimensions.

In the method for online processing of data provided in this embodiment, the decision maker can rapidly obtain data from various aspects of analysis according to the multi-dimensional service volume graph, and can also switch between the aspects dynamically or perform comprehensive analysis from multiple aspects, thereby providing extremely high flexibility in analysis.

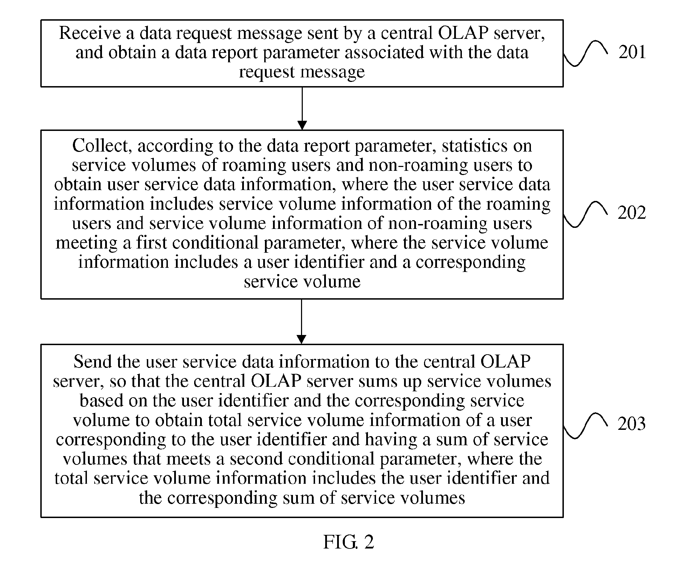

FIG. 2 is a flowchart of Embodiment 2 of a method for online processing of data of the present invention. This embodiment is executed by a sub OLAP server, where the sub OLAP server may be implemented by using software and/or hardware. As shown in FIG. 2, the method of this embodiment may include:

Step 201. Receive a data request message sent by a central OLAP server, and obtain a data reporting parameter associated with the data request message.

The sub OLAP server receives a data request message sent by the central OLAP server, and collects statistics on data. Before collecting statistics on data, the sub OLAP server needs to obtain a data reporting parameter associated with the data request message. Manners of obtaining, by the sub OLAP server, the data reporting parameter associated with the data request message include the following possible implementation manners: One possible implementation manner is to obtain, according to a predetermined mapping relationship between the data request message and the data reporting parameter, the data reporting parameter associated with the data request message, that is, after receiving the data request message, the sub OLAP server obtains the data reporting parameter according to the mapping relationship. Another possible implementation manner is: if the data request message carries a data reporting parameter, extracting the carried data reporting parameter from the data request message.

Step 202. Collect, according to the data reporting parameter, statistics on service volumes of one or more roaming users and one or more non-roaming users to obtain user service data information, where the user service data information includes service volume information of the roaming users and service volume information of one or more non-roaming users meeting a first condition parameter, and the service volume information includes user identifiers and corresponding service volumes.

The sub OLAP server collects statistics on service volumes of one or more roaming users and one or more non-roaming users according to the data reporting parameter to obtain service volume information of the roaming users and service volume information of one or more non-roaming users who meet a first preset condition parameter.

Herein, the data reporting parameter includes any one or a combination of the following: a statistics-required service type parameter, a statistical time segment parameter, and the first condition parameter.

The sub OLAP server may collect statistics according to specific content of the data reporting parameter. For example, if the data reporting parameter includes the statistics-required service type parameter, step 202 includes: collecting, according to the data reporting parameter, statistics on service volumes that are corresponding to the statistics-required service type parameter and that are of the roaming users and the non-roaming users to obtain the user service data information; or
if the data reporting parameter includes the statistical time segment parameter, step 202 includes: collecting, according to the data reporting parameter, statistics on service volumes that are corresponding to the statistical time segment parameter and that are of the roaming users and the non-roaming users to obtain the user service data information.

Persons skilled in the art may understand that in an actual operation process, the statistical time segment parameter and the service type parameter may further be combined to collect statistics on service volumes of a specific service type of the roaming users and the non-roaming users within a statistical time segment.

To improve the processing efficiency of the central OLAP server, the sub OLAP server must also determine the one or more non-roaming users meeting the first condition parameter. In a feasible embodiment, the first condition parameter is a condition parameter that a service volume is greater than a first preset threshold, or a condition parameter that a service volume ranks before a first preset ranking in service volumes of all non-roaming users.

Step 203. Send the user service data information to the central OLAP server, so that the central OLAP server sums up service volumes based on the user identifiers and the corresponding service volumes to obtain total service volume information of each of one or more users having a sum of service volumes that meets a second condition parameter among the sums of service volumes that are corresponding to the user identifiers, where the total service volume information includes the user identifier of each of the one or more users and a corresponding sum of service volumes.

In a feasible embodiment, the second condition parameter is a condition parameter that a sum of service volumes is greater than a second preset threshold, or a condition parameter that a sum of service volumes ranks before a second preset ranking in sums of service volumes of all users.

In the method for online processing of data provided in the embodiment of the present invention, a sub OLAP server receives a data request message sent by a central OLAP server; collects statistics on service volumes of one or more roaming users and one or more non-roaming users to obtain user service data information, where the user service data information includes service volume information of the roaming users and service volume information of one or more non-roaming users meeting a first condition parameter, and the service volume information includes a user identifier and a service volume; and sends the user service data information to the central OLAP server. In other words, the sub OLAP server screens the non-roaming users and sends service volume information of only a part of the non-roaming users to the central OLAP server, so that the central OLAP server only needs to sum up service volumes that are of the roaming users and are reported by the sub OLAP server, and service volumes that are of the non-roaming users meeting the first condition parameter and are reported by the sub OLAP server, that is, the sub OLAP server first collects statistics preliminarily, and then the central OLAP server further collects statistics based on a preliminary statistical result of the sub OLAP server, thereby reducing the amount of data processed by the central OLAP server and improving the efficiency of data processing.

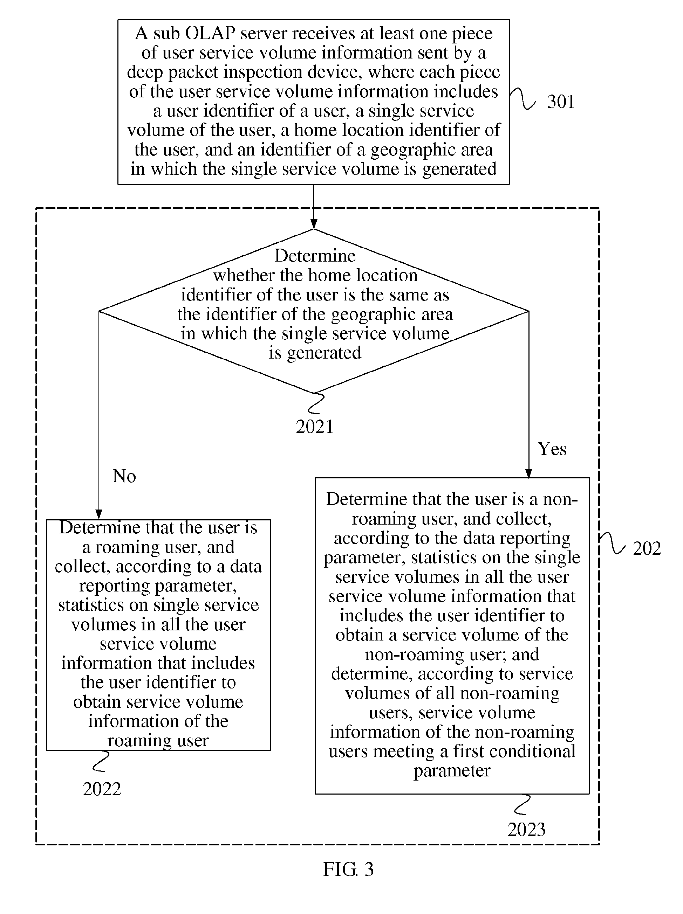

FIG. 3 is a flowchart of Embodiment 3 of a method for online processing of data of the present invention. Based on the embodiment of FIG. 2, this embodiment describes in detail step 202 in the embodiment of FIG. 2.

Before step 202, step 301 is further included. In step 301, the sub OLAP server receives at least one piece of user service volume information sent by a deep packet inspection device, where each piece of the user service volume information includes a user identifier of a user, a single service volume of the user, a home location identifier of the user, and an identifier of a geographic area in which the single service volume is generated.

The deep packet inspection (Deep Packet Inspection, DPI for short) device is capable of perceiving a network application, and capable of detecting traffic based on an application layer. In a specific implementation process, on one hand, the DPI device may be a server that has a DPI function and connected to a gateway device disposed in each geographic area; on the other hand, because access of mobile terminals of users in each geographic area are finally converged to the gateway device, a DPI module may be disposed in the gateway device, so that the gateway has a DPI capability and functions as a DPI device. In addition, each sub OLAP server has a gateway that is connected to the sub OLAP server. When the DPI device learns that a user uses a service within an area corresponding to the gateway, the DPI device sends at least one piece of user service volume information to the sub OLAP server, where the service volume information includes a user identifier of the user, a single service volume, a home location identifier, and an identifier of a geographic area in which the single service volume is generated.

Herein, the user identifier of the user may be a mobile phone number of a mobile terminal of the user; the identifier of the geographic area in which the single service volume is generated may be an identifier of a place in which the single service volume is generated; the single service volume of the user may be a service volume generated when the user uses a service once, for example, traffic generated when the user uses a traffic service once, or a call duration generated when the user uses a call service once. A specific manner of the single service volume is not particularly limited herein in this embodiment. Particularly, the home location identifier and the identifier of the geographic area in which the single service volume is generated may be a device number of a corresponding DPI device. For example, as shown in Table 1, sub OLAP servers located in different geographic areas all have corresponding DPI devices, where a device number of a DPI device corresponding to a sub OLAP server located in Shenzhen is 1001, a device number of a DPI device corresponding to a sub OLAP server located in Guangzhou is 1002, a device number of a DPI device corresponding to a sub OLAP server located in Zhuhai is 1003, and a device number of a DPI device corresponding to a sub OLAP server located in Dongguan is 1004. Mapping information in Table 1 may be used as metadata, which is maintained by each DPI device.

**Table 1**

| Device Number | Area Code | Area Name |
|---|---|---|
| 1001 | 755 | Shenzhen |
| 1002 | 20 | Guangzhou |
| 1003 | 756 | Zhuhai |
| 1004 | 769 | Dongguan |

Taking a specific embodiment as an example, when a user whose home location is Shenzhen (the home location identifier is 1001) roams to Guangzhou, uses a service in Guangzhou and generates corresponding traffic (the identifier of the geographic area in which the single service volume is generated is 1002), a DPI device located in Guangzhou perceives this behavior of the user, and sends user service volume information to a sub OLAP server connected to the DPI device, where the information includes a mobile phone number of the user, the single service volume, the home location identifier 1001, and the identifier 1002 of the geographic area in which the single service volume is generated. Persons skilled in the art may understand that when the sub OLAP server receives the user service volume information sent by the DPI device, the sub OLAP server may receive the user service volume information piece by piece in real time, or may receive multiple pieces of the user service volume information simultaneously in batches. A specific implementation manner of receiving the user service volume information by the sub OLAP server is not repeatedly described herein in this embodiment.

In a feasible embodiment, after receiving the user service volume information sent by the DPI device, the sub OLAP server stores the user service volume information. In a specific implementation process, a new user information table may be created, where the user information table is used for storing the user service volume information, such as the identifier of the user, the home location identifier, the identifier of the geographic area in which the single service volume is generated, and the service volume. When the DPI device sends the user service volume information to the sub OLAP server, the sub OLAP server may add the user service volume information into the user information table. To differentiate user service volume information of a user and determine a time at which the service volume is generated, a field of a time point at which the single service volume is generated may further be added to the user information table, and be used to record the time at which the single service volume is generated.

Correspondingly, step 202 specifically includes:

Step 2021. Determine whether the home location identifier of the user is the same as the identifier of the geographic area in which the single service volume is generated; if not, perform step 2022; and if yes, perform step 2023.

Step 2022. Determine that the user is a roaming user, and collect, according to the data reporting parameter, statistics on single service volumes in all the user service volume information that includes the user identifier to obtain service volume information of the roaming user.

Step 2023. Determine that the user is a non-roaming user, and collect, according to the data reporting parameter, statistics on single service volumes in all the user service volume information that includes the user identifier to obtain a service volume of the non-roaming user; and determine, according to service volumes of all non-roaming users, service volume information of one or more non-roaming users meeting a first condition parameter.

In a specific implementation process, the sub OLAP server may obtain related information directly from the user information table. For example, in step 2021, the sub OLAP server may determine whether the user is a roaming user or a non-roaming user according to the home location identifier and the identifier of the geographic area in which the single service volume is generated in the user information table. As shown in Table 2, Table 2 only lists a part of fields in the user information table: a user identifier, a home location identifier, and an identifier of a geographic area in which a single service volume is generated.

**Table 2**

| User identifier | Home location identifier | Identifier of a geographic area in which a single service volume is generated |
|---|---|---|
| 13512345678 | 1001 | 1002 |
| 13222345678 | 1002 | 1002 |

The sub OLAP server determines whether the home location identifier is the same as the identifier of the geographic area in which the single service volume is generated, that is, the sub OLAP server determines, when a same user in Table 2 generates a single service volume, whether the home location identifier of the user is the same as the identifier of the geographic area in which the single service volume is generated. For example, for user 13512345678, a home location identifier 1001 of the user is different from an identifier 1002 of a geographic area in which a single service volume is generated, and accordingly it is determined that the user is a roaming user, and step 2022 is performed. For user 13222345678, a home location identifier 1002 of the user is the same as an identifier 1002 of a geographic area in which a single service volume is generated, and accordingly it is determined that the user is a non-roaming user, and step 2023 is performed.

In a feasible embodiment, after it is determined whether the user is a roaming user or a non-roaming user, a roaming information table and a non-roaming information table may be created according to the user information table. Herein, the roaming information table may include only a user identifier of a roaming user, a single service volume of the roaming user, and a time at which the single service volume is generated; and correspondingly, the non-roaming information table may also include only a user identifier of a non-roaming user, a single service volume of the roaming user, and a time at which the single service volume is generated. Persons skilled in the art may understand that there are various manners of creating a table in this embodiment, and a specific manner of creating a table is not particularly limited herein in this embodiment.

In step 2022, when it is determined that a current user is a roaming user, statistics are collected, according to the data reporting parameter, on single service volumes in all user service information that includes the user identifier to obtain a service volume of the roaming user. Specifically, statistics may be collected according to parameters in the data reporting parameter. For example, when the statistical time segment parameter indicates that the statistical time segment is the second week of May, and the statistics-required service type parameter is a traffic service parameter, all single service volumes belonging to the traffic service of the user that are generated within the time segment are accumulated.

In step 2023, when it is determined that the current user is a non-roaming user, statistics are collected, according to the data reporting parameter, on single service volumes in all user service volume information that includes the user identifier to obtain a service volume of the non-roaming user, and user identifiers and service volumes of the one or more non-roaming users meeting the first condition parameter are determined according to service volumes of all non-roaming users. Specifically, statistics may be collected according to parameters in the data reporting parameter. For example, statistics are collected on service volumes belonging to the traffic service of all non-roaming users within a statistical time segment of 7 p.m. to 8 p.m. and a user identifier and a service volume of a non-roaming user meeting the first condition parameter are determined according to the single service volumes of the traffic service of all the non-roaming users. The first condition parameter may be a condition parameter that the service volume is greater than a first preset threshold.

By determining service volume information based on a roaming user and determining service volume information based on a non-roaming user meeting a first condition parameter, the method for online processing of data of this embodiment is highly targeted and avoids a meaningless waste of system resources, thereby greatly improving the performance of the method for online processing of data.

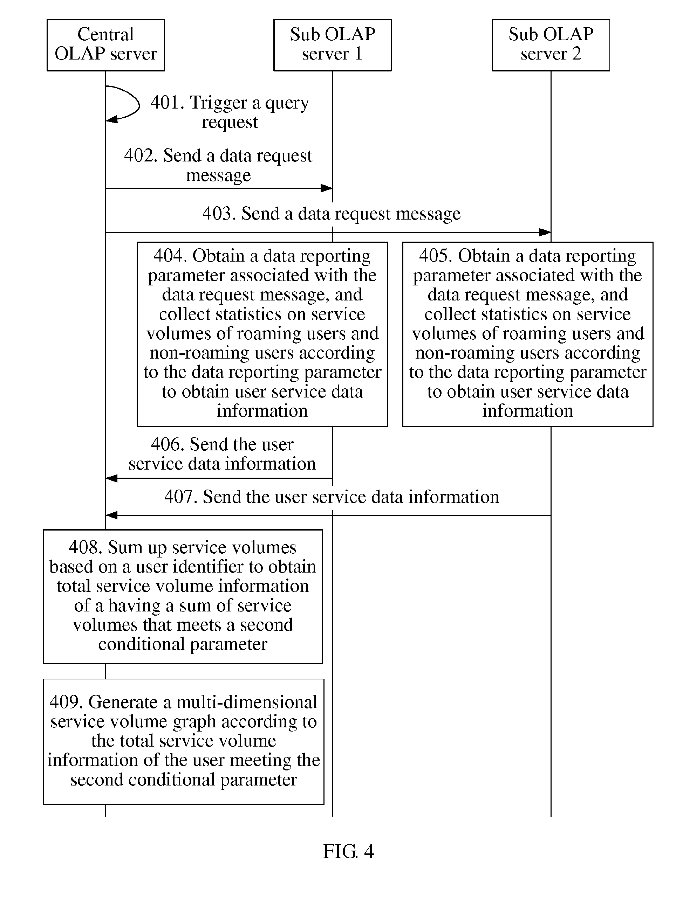

FIG. 4 is a flowchart of Embodiment 4 of a method for online processing of data of the present invention. As shown in FIG. 4, two sub OLAP servers are used as an example, that is, when a decision maker of an operator triggers a query request, the method for online processing of data of this embodiment includes the following steps:

Step 401. A decision maker triggers a query request to a central OLAP server.

Step 402. The central OLAP server sends a data request message to sub OLAP server 1.

Step 403. The central OLAP server sends a data request message to sub OLAP server 2.

Persons skilled in the art may understand that there is no strict timing relationship between step 402 and step 403, and the two may be performed simultaneously.

Step 404. Sub OLAP server 1 obtains a data reporting parameter associated with the data request message, and collects statistics on service volumes of one or more roaming users and one or more non-roaming users according to the data reporting parameter to obtain user service data information.

Step 405. Sub OLAP server 2 obtains a data reporting parameter associated with the data request message, and collects statistics on service volumes of one or more roaming users and one or more non-roaming users according to the data reporting parameter to obtain user service data information.

Persons skilled in the art may understand that there is no strict timing relationship between step 404 and step 405, and the two may be performed simultaneously. For a specific embodiment, reference may be made to the embodiments shown in FIG. 2 and FIG. 3, which are not repeatedly described herein in this embodiment.

Step 406. Sub OLAP server 1 sends the user service data information to the central OLAP server.

Step 407. Sub OLAP server 2 sends the user service data information to the central OLAP server.

Persons skilled in the art may understand that there is no strict timing relationship between step 406 and step 407, and the two may be performed simultaneously.

Step 408. The central OLAP server sums up service volumes based on user identifiers to obtain total service volume information of a user having a sum of service volumes that meets a second condition parameter.

Step 409. The central OLAP server generates a multi-dimensional service volume graph according to the total service volume information of each of one or more users having a sum of service volumes that meets the second condition parameter.

For a specific embodiment of step 408 and step 409, reference may be made to the embodiment shown in FIG. 1, and details are not repeatedly described herein in this embodiment.

This embodiment only uses two sub OLAP servers as an example, and in a specific application process, the number of sub OLAP servers may be greater. For a method for online processing of data that is performed by each sub OLAP server, reference may be made to the embodiments shown in FIG. 2 and FIG. 3. For a method for online processing of data that is performed by the central OLAP server, reference may be made to the embodiment shown in FIG. 1.

The embodiment shown in FIG. 4 is used. In a specific embodiment, the number of sub OLAP servers is 4, and each sub OLAP server serves 1 million users, that is, there are 4 million users in total. It is assumed that 15% of all the users roam to other three areas, 20% of all the users roam to other two areas, 25% of all the users roam to another area, and the remaining 40% of all the users do not have a roaming behavior. When a service type on which statistics need to be collected is traffic service, a statistical time segment is January 1, 2012 to January 31, 2012, according to the method for online processing of data of this embodiment, there are about 237,000 pieces of user service volume information on which statistics have finally been collected by the central OLAP server, and a time for generating a multi-dimensional service volume graph by the central OLAP server is 121 seconds; whereas, according to a generating method in the prior art, in the same scenario and under the same condition, there are about 400,000 records on which statistics have finally been collected by the central OLAP server, and a time for generating a multi-dimensional service volume graph finally is 517 seconds. Compared with the prior art, the performance of the method for online processing of data provided in this embodiment is improved by 76.6%.

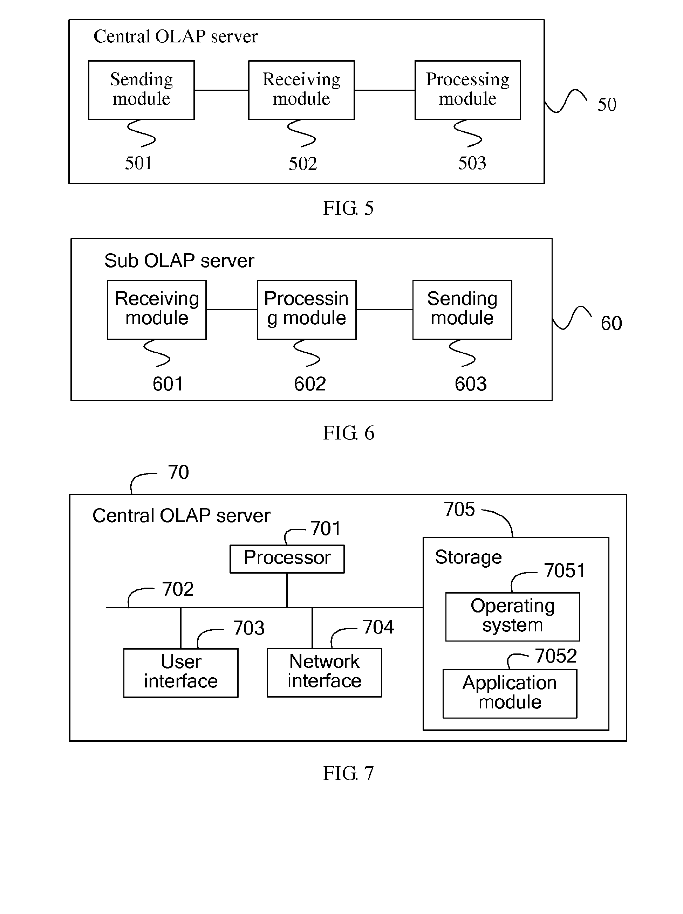

FIG. 5 is a schematic structural diagram of Embodiment 1 of a central online analytical processing server of the present invention. As shown in FIG. 5, the central OLAP server 50 provided in this embodiment includes a sending module 501, a receiving module 502, and a processing module 503.

Herein, the sending module 501 is configured to send a data request message to at least one sub online analytical processing OLAP server.

The receiving module 502 is configured to receive user service data information sent by the at least one sub OLAP server, where the user service data information includes service volume information of one or more roaming users and service volume information of one or more non-roaming users meeting a first condition parameter, and the service volume information includes user identifiers and corresponding service volumes.

The processing module 503 is configured to sum up service volumes based on the user identifiers and the corresponding service volumes to obtain total service volume information of each of one or more users having a sum of service volumes that meets a second condition parameter among the sums of service volumes that are corresponding to the user identifiers, where the total service volume information includes the user identifier of each of the one or more users and a corresponding sum of service volumes.

The central online analytical processing server of this embodiment may be configured to implement the technical solution of the embodiment shown in FIG. 1. The implementation principles and technical effects are similar to those of the embodiment, and details are not repeatedly described herein.

Further, the processing module 503 is specifically configured to:
collect, based on the user identifiers and the corresponding service volumes, statistics on a sum of service volumes of each of the users corresponding to the user identifiers as a roaming user and a non-roaming user; and
determine, according to the sum of service volumes of each of the users, the total service volume information of each of the one or more users having a sum of service volumes that meets the second condition parameter.

Further, the sending module 501 is specifically configured to send a data request message that carries a data reporting parameter to the at least one sub OLAP server, where the data reporting parameter includes any one or a combination of the following: a statistics-required service type parameter, a statistical time segment parameter, and the first condition parameter.

Further, the first condition parameter is a condition parameter that a service volume is greater than a first preset threshold, or a condition parameter that a service volume ranks before a first preset ranking in service volumes of all non-roaming users; and
the second condition parameter is a condition parameter that a sum of service volumes is greater than a second preset threshold, or a condition parameter that a sum of service volumes ranks before a second preset ranking in sums of service volumes of all users.

Further, the processing module 503 is further configured to:
generate a multi-dimensional service volume graph according to the total service volume information of each of one or more users having a sum of service volumes that meets the second condition parameter.

Further, sub OLAP servers are deployed in different geographic areas.

The central online analytical processing server of this embodiment may be configured to implement the technical solution of the foregoing embodiment of the method for online processing of data. The implementation principles and technical effects of the central online analytical processing server are similar to those of the method embodiment, and details are not repeatedly described herein.

FIG. 6 is a schematic structural diagram of Embodiment 1 of a sub online analytical processing server of the present invention. As shown in FIG. 6, the sub OLAP server 60 provided in this embodiment includes a receiving module 601, a processing module 602, and a sending module 603.

Herein, the receiving module 601 is configured to receive a data request message sent by a central online analytical processing OLAP server, and obtain a data reporting parameter associated with the data request message.

The processing module 602 is configured to collect, according to the data reporting parameter, statistics on service volumes of one or more roaming users and one or more non-roaming users to obtain user service data information, where the user service data information includes service volume information of the roaming users and service volume information of one or more non-roaming users meeting a first condition parameter, and the service volume information includes user identifiers and corresponding service volumes.

The sending module 603 is configured to send the user service data information to the central OLAP server, so that the central OLAP server sums up service volumes based on the user identifiers and the corresponding service volumes to obtain total service volume information of each of one or more users having a sum of service volumes that meets a second condition parameter among the sums of service volumes that are corresponding to the user identifiers, where the total service volume information includes the user identifier of each of the one or more users and a corresponding sum of service volumes.

The sub online analytical processing server of this embodiment may be configured to implement the technical solution of the embodiment shown in FIG. 2. The implementation principles and technical effects of the sub online analytical processing server are similar to those of the embodiment, and details are not repeatedly described herein.

Further, the receiving module 601 is further configured to:
receive at least one piece of user service volume information sent by a deep packet inspection device, where each piece of the user service volume information includes a user identifier of a user, a single service volume of the user, a home location identifier of the user, and an identifier of a geographic area in which the single service volume is generated.

The processing module 602 is specifically configured to:
if the home location identifier of the user is different from the identifier of the geographic area in which the single service volume is generated, determine that the user is a roaming user, and collect, according to the data reporting parameter, statistics on single service volumes in all the user service volume information that includes the user identifier to obtain service volume information of the roaming user; and
if the home location identifier of the user is the same as the identifier of the geographic area in which the single service volume is generated, determine that the user is a non-roaming user, and collect, according to the data reporting parameter, statistics on single service volumes in all the user service volume information that includes the user identifier to obtain a service volume of the non-roaming user; and determine, according to service volumes of all non-roaming users, service volume information of one or more non-roaming users meeting the first condition parameter.

Further, the data reporting parameter includes any one or a combination of the following: a statistics-required service type parameter, a statistical time segment parameter, and the first condition parameter.

The processing module 602 is specifically configured to: if the data reporting parameter includes the statistics-required service type parameter, collect statistics on service volumes that are corresponding to the statistics-required service type parameter and that are of the roaming users and the non-roaming users to obtain user service data information, where the user service data information includes service volume information of the roaming users and service volume information of one or more non-roaming users meeting the first condition parameter, and the service volume information includes user identifiers and corresponding service volumes; or,
the processing module 602 is specifically configured to: if the data reporting parameter includes the statistical time segment parameter, collect statistics on service volumes that are corresponding to the statistical time segment parameter and that are of the roaming users and the non-roaming users, where the user service data information includes service volume information of the roaming users and service volume information of one or more non-roaming users meeting the first condition parameter, and the service volume information includes user identifiers and corresponding service volumes.

Further, the first condition parameter is a condition parameter that a service volume is greater than a first preset threshold, or a condition parameter that a service volume ranks before a first preset ranking in service volumes of all non-roaming users; and
the second condition parameter is a condition parameter that a sum of service volumes is greater than a second preset threshold, or a condition parameter that a sum of service volumes ranks before a second preset ranking in sums of service volumes of all users.

Further, the receiving module 601 is specifically configured to receive the data request message sent by the central online analytical processing OLAP server, and obtain, according to a predetermined mapping relationship between the data request message and the data reporting parameter, the data reporting parameter associated with the data request message; or,
the receiving module 601 is specifically configured to: receive the data request message sent by the central online analytical processing OLAP server, and if the data request message carries a data reporting parameter, extract the carried data reporting parameter from the data request message.

The sub online analytical processing server of this embodiment may be configured to implement the technical solution of the foregoing embodiment of the method for online processing of data. The implementation principles and technical effects of the sub online analytical processing server are similar to those of the method embodiment, and details are not repeatedly described herein.

FIG. 7 is a schematic structural diagram of Embodiment 2 of a central online analytical processing server of the present invention. As shown in FIG. 7, the central OLAP server 70 includes: at least one processor 701 such as a CPU, at least one network interface 704 or another user interface 703, a storage 705, and at least one communications bus 702. The communications bus 702 is configured to implement connection and communication between the components. The user interface 703 optionally included by the central OLAP server 70 includes a display, a keyboard, or a pointing device (for example, a mouse, a trackball (trackball), a touch panel, or a touchscreen). The storage 705 may include a high speed RAM and may also include a non-volatile memory (non-volatile memory), for example, at least one disk storage. The storage 705 optionally may include at least one storage apparatus located away from the processor 701.

In some implementation manners, the storage 705 stores the following elements, executable modules or data structures, or their subsets, or their extension sets:
an operating system 7051, including various system programs and configured to implement various fundamental services and process hardware-based tasks; and
an application module 7052, including various application programs and configured to implement various application services.

The application module 7052 includes, but is not limited to, the sending module 501, the receiving module 502, and the processing module 703.

For specific implementation of modules in the application module 7052, reference may be made to corresponding modules in the embodiment shown in FIG. 5, and details are not repeatedly described herein.

Specifically, the processor 701 is configured to send a data request message to at least one sub online analytical processing OLAP server;
receive user service data information sent by the at least one sub OLAP server, where the user service data information includes service volume information of one or more roaming users and service volume information of the one or more non-roaming users meeting a first condition parameter, and the service volume information includes user identifiers and corresponding service volumes; and
sum up service volumes based on the user identifiers and the corresponding service volumes to obtain total service volume information of each of one or more users having a sum of service volumes that meets a second condition parameter among the sums of service volumes that are corresponding to the user identifiers, where the total service volume information includes the user identifier of each of the one or more users and a corresponding sum of service volumes.

Further, the summing up service volumes based on the user identifiers and the corresponding service volumes to obtain total service volume information of each of one or more users having a sum of service volumes that meets a second condition parameter among the sums of service volumes that are corresponding to the user identifiers includes:
collecting, based on the user identifiers and the corresponding service volumes, statistics on a sum of service volumes of each of the users corresponding to the user identifiers as a roaming user and a non-roaming user; and
determining, according to the sum of service volumes of each of the users, the total service volume information of each of the one or more users having a sum of service volumes that meets the second condition parameter.

Further, a data reporting parameter is carried in the data request message, where the data reporting parameter includes any one or a combination of the following: a statistics-required service type parameter, a statistical time segment parameter, and the first condition parameter.

Further, the first condition parameter is a condition parameter that a service volume is greater than a first preset threshold, or a condition parameter that a service volume ranks before a first preset ranking in service volumes of all non-roaming users; and
the second condition parameter is a condition parameter that a sum of service volumes is greater than a second preset threshold, or a condition parameter that a sum of service volumes ranks before a second preset ranking in sums of service volumes of all users.

Further, after the summing up service volumes based on the user identifiers and the corresponding service volumes to obtain total service volume information of each of one or more users having a sum of service volumes that meets a second condition parameter among the sums of service volumes that are corresponding to the user identifiers, the following is further included:generating a multi-dimensional service volume graph according to the total service volume information of each of one or more users having a sum of service volumes that meets the second condition parameter.

The central online analytical processing server of this embodiment may be configured to implement the technical solution of the foregoing embodiment of the method for online processing of data. The implementation principles and technical effects of the central online analytical processing server are similar to those of the method embodiment, and details are not repeatedly described herein.

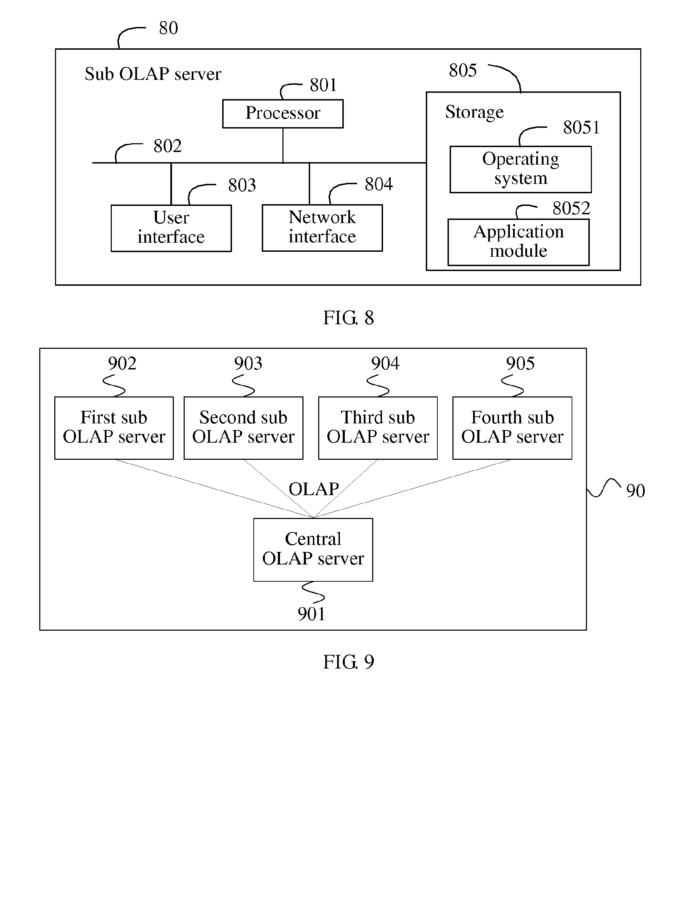

FIG. 8 is a schematic structural diagram of Embodiment 2 of a sub online analytical processing server of the present invention. As shown in FIG. 8, the sub OLAP server 80 includes: at least one processor 801 such as a CPU, at least one network interface 804 or another user interface 803, a storage 805, and at least one communications bus 802. The communications bus 802 is configured to implement connection and communication between the components. The user interface 803 optionally included by the sub OLAP server 80 includes a display, a keyboard, or a pointing device (for example, a mouse, a trackball (trackball), a touch panel, or a touchscreen). The storage 805 may include a high speed RAM memory, and may also include a non-volatile memory (non-volatile memory), for example, at least one disk storage. The storage 805 optionally may include at least one storage apparatus located away from the processor 801.

In some implementation manners, the storage 805 stores the following elements, executable modules or data structures, or their subsets, or their extension sets:
an operating system 8051, including various system programs and configured to implement various fundamental services and process hardware-based tasks; and
an application module 8052, including various application programs and configured to implement various application services.

The application module 8052 includes, but is not limited to, the receiving module 601, the processing module 602, and the sending module 603.

For specific implementation of modules in the application module 8052, reference may be made to corresponding modules in the embodiment shown in FIG. 6, and details are not repeatedly described herein.

Specifically, the processor 801 is configured to receive a data request message sent by a central OLAP server, and obtain a data reporting parameter associated with the data request message;
collect, according to the data reporting parameter, statistics on service volumes of one or more roaming users and one or more non-roaming users to obtain user service data information, where the user service data information includes service volume information of the roaming users and service volume information of one or more non-roaming users meeting a first condition parameter, and the service volume information includes user identifiers and corresponding service volumes; and
send the user service data information to the central OLAP server, so that the central OLAP server sums up service volumes based on the user identifiers and the corresponding service volumes to obtain total service volume information of each of one or more users having a sum of service volumes that meets a second condition parameter among the sums of service volumes that are corresponding to the user identifiers, where the total service volume information includes the user identifier of each of the one or more users and a corresponding sum of service volumes.

Further, before the collecting, according to the data reporting parameter, statistics on service volumes of roaming users and non-roaming users to obtain user service data information, the following is further included:receiving at least one piece of user service volume information sent by a deep packet inspection device, where each piece of the user service volume information includes a user identifier of a user, a single service volume of the user, a home location identifier of the user, and an identifier of a geographic area in which the single service volume is generated; and
the collecting, according to the data reporting parameter, statistics on service volumes of one or more roaming users and one or more non-roaming users to obtain user service data information includes:
if the home location identifier of the user is different from the identifier of the geographic area in which the single service volume is generated, determining that the user is a roaming user, and collecting, according to the data reporting parameter, statistics on single service volumes in all the user service volume information that includes the user identifier to obtain service volume information of the roaming user; and
if the home location identifier of the user is the same as the identifier of the geographic area in which the single service volume is generated, determining that the user is a non-roaming user, and collecting, according to the data reporting parameter, statistics on single service volumes in all the user service volume information that includes the user identifier to obtain a service volume of the non-roaming user; and determining, according to service volumes of all non-roaming users, service volume information of one or more non-roaming users meeting the first condition parameter.

Further, the data reporting parameter includes any one or a combination of the following: a statistics-required service type parameter, a statistical time segment parameter, and the first condition parameter;
if the data reporting parameter includes the statistics-required service type parameter, the collecting, according to the data reporting parameter, statistics on service volumes of one or more roaming users and one or more non-roaming users to obtain user service data information includes: collecting statistics on service volumes that are corresponding to the statistics-required service type parameter and that are of the roaming users and the non-roaming users to obtain the user service data information; and
if the data reporting parameter includes the statistical time segment parameter, the collecting, according to the data reporting parameter, statistics on service volumes of one or more roaming users and one or more non-roaming users to obtain user service data information includes: collecting statistics on service volumes that are corresponding to the statistical time segment parameter and that are of the roaming users and the non-roaming users to obtain the user service data information.

Further, the first condition parameter is a condition parameter that a service volume is greater than a first preset threshold, or a condition parameter that a service volume ranks before a first preset ranking in service volumes of all non-roaming users; and
the second condition parameter is a condition parameter that a sum of service volumes is greater than a second preset threshold, or a condition parameter that a sum of service volumes ranks before a second preset ranking in sums of service volumes of all users.

Further, the obtaining a data reporting parameter associated with the data request message includes:
obtaining, according to a predetermined mapping relationship between the data request message and the data reporting parameter, the data reporting parameter associated with the data request message;
or, if the data request message carries a data reporting parameter, the obtaining a data reporting parameter associated with the data request message includes:
   extracting the carried data reporting parameter from the data request message.

The sub online analytical processing server of this embodiment may be configured to implement the technical solution of the foregoing embodiment of the method for online processing of data. The implementation principles and technical effects of the sub online analytical processing server are similar to those of the method embodiment, and details are not repeatedly described herein.

FIG. 9 is a schematic structural diagram of Embodiment 1 of a system for online processing of data of the present invention. The system 90 for online processing of data provided in this embodiment includes a central OLAP server and at least one sub OLAP server.

Taking four sub OLAP servers as an example, the system 90 for online processing of data provided in this embodiment includes a central OLAP server 901, a first sub OLAP server 902, a second sub OLAP server 903, a third sub OLAP server 904, and a fourth sub OLAP server 905.

It should be noted that in the system of the embodiment of the present invention, the number of OLAP can be extended, the number of OLAP levels can also extended, and a single OLAP load can also be extended in a balanced manner.

Each sub OLAP server may further be provided internally with or be externally connected to a disk array, where the disk array is configured to store various user information tables.

In an implementation manner, the central OLAP server 901 may be the central OLAP server shown in FIG. 5. Each sub OLAP server may have the structure of the sub OLAP server shown in FIG. 6.

In another implementation manner, the central OLAP server 901 is configured to send a data request message to the at least one sub OLAP server; receive user service data information sent by the at least one sub OLAP server, where the user service data information includes service volume information of one or more roaming users and service volume information of one or more non-roaming users meeting a first condition parameter, and the service volume information includes user identifiers and corresponding service volumes; and sum up service volumes based on the user identifiers and the corresponding service volumes to obtain total service volume information of each of one or more users having a sum of service volumes that meets a second condition parameter among the sums of service volumes that are corresponding to the user identifiers, where the total service volume information includes the user identifier of each of the one or more users and a corresponding sum of service volumes; and
the sub OLAP server is configured to: receive a data request message sent by the central OLAP server 901, and obtain a data reporting parameter corresponding to the data request message; collect, according to the data reporting parameter, statistics on service volumes of one or more roaming users and one or more non-roaming users to obtain user service data information; and send the user service data information to the central OLAP server 901, where the user service data information includes service volume information of the roaming users and service volume information of one or more non-roaming users meeting the first condition parameter, and the service volume information includes user identifiers and corresponding service volumes.

Further, the central OLAP server 901 is specifically configured to:
send a data request message to the at least one sub OLAP server; receive user service data information sent by the at least one sub OLAP server, where the user service data information includes service volume information of one or more roaming users and service volume information of one or more non-roaming users meeting the first condition parameter, and the service volume information includes user identifiers and corresponding service volumes;
collect, based on the user identifiers and the corresponding service volumes, statistics on a sum of service volumes of each of the users corresponding to the user identifiers as a roaming user and a non-roaming user; and
determine, according to the sum of service volumes of each of the users, the total service volume information of each of the one or more users having a sum of service volumes that meets the second condition parameter, where the total service volume information includes the user identifier of each of the one or more users and a corresponding sum of service volumes.

Further, the sub OLAP server is specifically configured to:
receive a data request message sent by the central OLAP server 901;
obtain, according to a predetermined mapping relationship between the data request message and the data reporting parameter, the data reporting parameter associated with the data request message;
or, if the data request message carries a data reporting parameter, extract the carried data reporting parameter from the data request message;
receive at least one piece of user service volume information sent by a deep packet inspection device, where each piece of the user service volume information includes a user identifier of a user, a single service volume of the user, a home location identifier of the user, and an identifier of a geographic area in which the single service volume is generated;
if the home location identifier of the user is different from the identifier of the geographic area in which the single service volume is generated, determine that the user is a roaming user, and collect, according to the data reporting parameter, statistics on single service volumes in all the user service volume information that includes the user identifier to obtain service volume information of the roaming user, where the service volume information includes user identifiers and corresponding service volumes;
if the home location identifier of the user is the same as the identifier of the geographic area in which the single service volume is generated, determine that the user is a non-roaming user, and collect, according to the data reporting parameter, statistics on single service volumes in all the user service volume information that includes the user identifier to obtain a service volume of the non-roaming user; and determine, according to service volumes of all non-roaming users, service volume information of one or more non-roaming users meeting the first condition parameter, where the service volume information includes user identifiers and corresponding service volumes; and
send the user service data information to the central OLAP server 901, so that the central OLAP server 901 sums up service volumes based on the user identifiers and the corresponding service volumes to obtain total service volume information of a user corresponding to the user identifier and having a sum of service volumes that meets the second condition parameter, where the total service volume information includes the user identifier of each of the one or more users and a corresponding sum of service volumes.

Further, the sub OLAP server is specifically configured to:
receive a data request message sent by the central OLAP server 901;
obtain, according to a predetermined mapping relationship between the data request message and the data reporting parameter, the data reporting parameter associated with the data request message;
or, if the data request message carries a data reporting parameter, extract the carried data reporting parameter from the data request message; where
the data reporting parameter includes any one or a combination of the following: a statistics-required service type parameter, a statistical time segment parameter, and the first condition parameter;
if the data reporting parameter includes the statistics-required service type parameter, collect statistics on service volumes that are corresponding to the statistics-required service type parameter and that are of the roaming users and the non-roaming users to obtain user service data information, where the user service data information includes service volume information of the roaming users and service volume information of one or more non-roaming users meeting the first condition parameter, and the service volume information includes user identifiers and corresponding service volumes; or,
if the data reporting parameter includes the statistical time segment parameter, collect statistics on service volumes that are corresponding to the statistical time segment parameter and that are of the roaming users and the non-roaming users to obtain user service data information, where the user service data information includes service volume information of the roaming users and service volume information of one or more non-roaming users meeting the first condition parameter, and the service volume information includes user identifiers and corresponding service volumes; and
send the user service data information to the central OLAP server 901, so that the central OLAP server 901 sums up service volumes based on the user identifiers and the corresponding service volumes to obtain total service volume information of a user corresponding to the user identifier and having a sum of service volumes that meets the second condition parameter, where the total service volume information includes the user identifier of each of the one or more users and a corresponding sum of service volumes.

In the foregoing implementation manner, the central OLAP server 901 may be implemented by using the structure shown in FIG. 7, and each sub OLAP server may be implemented by using the structure shown in FIG. 8.

The system for online processing of data of this embodiment may be configured to implement the technical solution of the foregoing embodiment of the method for online processing of data. The implementation principles and technical effects of the system are similar to those in the method embodiment, and details are not repeatedly described herein.

The system for online processing of data of this embodiment may be configured to implement the technical solution of the foregoing embodiment of the method for online processing of data. The implementation principles and technical effects of the system are similar to those in the method embodiment, and details are not repeatedly described herein.

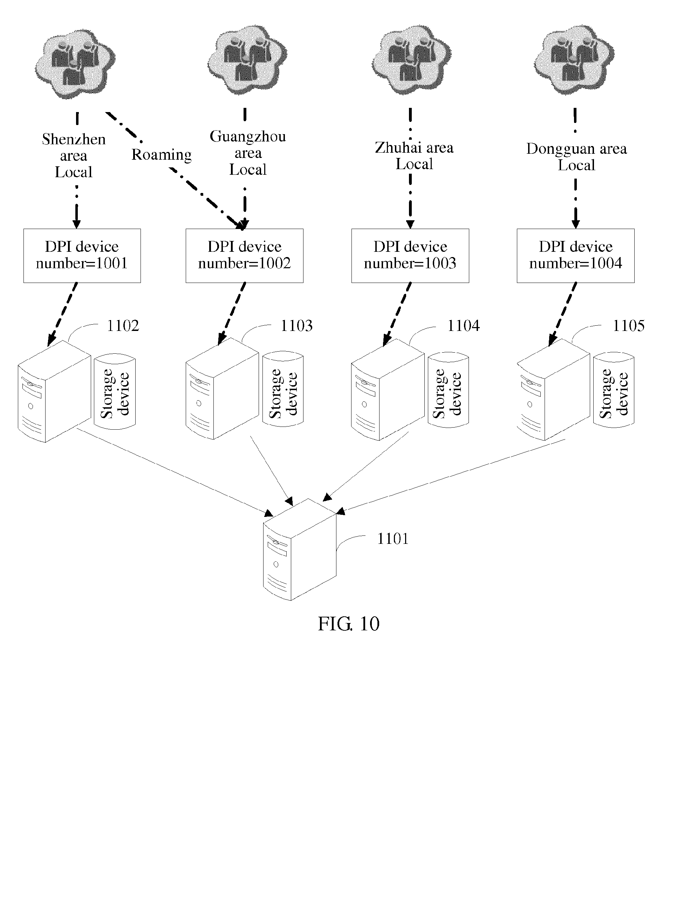

FIG. 10 is a schematic diagram of an application of a system for online processing of data of the present invention. In a specific application process, a sub OLAP server may further be connected to a DPI device. As shown in FIG. 10, a first sub OLAP server 1102, a second sub OLAP server 1103, a third sub OLAP server 1104, and a fourth sub OLAP server 1105 are respectively connected to DPI devices numbered 1001, 1002, 1003, and 1004. When a DPI device learns that a user uses a service within a geographic area corresponding to the gateway, the DPI device may send at least one piece of user service volume information to a sub OLAP server. Taking the DPI device numbered 1002 as an example, the DPI device sends user service volume information of a local user of Guangzhou area to the second sub OLAP server 1103, and also sends, to the second sub OLAP server 1103, user service volume information of a user who roams to Guangzhou area and whose home location is Shenzhen area.

Each sub OLAP server receives at least one piece of user service volume information sent by the DPI device. Particularly, each sub online OLAP server may further be provided internally with or be externally connected to a storage device, such as a disk array, where the disk array is configured to store various user information tables that include service volume information of users.

When each sub OLAP server receives a data request message sent by a central OLAP server 1101, each sub OLAP server obtains, according to the data request message and according to stored service volume information of users, service volume information of one or more roaming users and service volume information of one or more non-roaming users meeting a first condition parameter. For a specific implementation process, reference may be made to FIG. 3, and details are not repeatedly described herein in this embodiment.

Each sub OLAP server sends user service data information to the central OLAP server 1101, including the service volume information of the roaming users and the service volume information of the one or more non-roaming users meeting the first condition parameter.

The central OLAP server 1101 sums up service volumes based on the user identifier and the corresponding service volume to obtain total service volume information of each of one or more users having a sum of service volumes that meets a second condition parameter among the sums of service volumes that are corresponding to the user identifiers, where the total service volume information includes the user identifier of each of the one or more users and a corresponding sum of service volumes.

In the system for online processing of data provided in this embodiment, a central OLAP server sends a data request message to at least one sub OLAP server, and the central OLAP server receives user service data information sent by the at least one sub OLAP server, where the user service data information includes service volume information of one or more roaming users and service volume information of one or more non-roaming users meeting a first condition parameter, that is, the sub OLAP server screens non-roaming users, and the central OLAP server receives service volume information of only a part of non-roaming users; and the central OLAP server sums up service volumes according to users to obtain total service volume information of a user having a sum of service volumes that meets a second condition parameter, where the central OLAP server only needs to sum up service volumes that are of the roaming users and are reported by the sub OLAP server, and service volumes that are of the non-roaming users meeting the first condition parameter and are reported by the sub OLAP server, that is, the sub OLAP server first collects statistics preliminarily, and then the central OLAP server further collects statistics based on a preliminary statistical result of the sub OLAP server, thereby reducing the amount of data processed by the central OLAP server, and improving the efficiency of data processing.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, as long as such modifications or replacements do not cause the essence of corresponding technical solutions to depart from the scope of the technical solutions of the embodiments of the present invention.

## Claims

1. A method for online processing of data, comprising:
sending a data request message to at least one sub online analytical processing OLAP server;
receiving user service data information sent by the at least one sub OLAP server, wherein the user service data information comprises service volume information of one or more roaming users and service volume information of one or more non-roaming users meeting a first condition parameter, and the service volume information comprises user identifiers and corresponding service volumes; and
summing up service volumes based on the user identifiers and the corresponding service volumes to obtain total service volume information of each of one or more users having a sum of service volumes that meets a second condition parameter among the sums of service volumes that are corresponding to the user identifiers, wherein the total service volume information comprises the user identifier of each of the one or more users and a corresponding sum of service volumes.

2. The method according to claim 1, wherein the summing up service volumes based on the user identifiers and the corresponding service volumes to obtain total service volume information of each of one or more users having a sum of service volumes that meets a second condition parameter among the sums of service volumes that are corresponding to the user identifiers comprises:
collecting, based on the user identifiers and the corresponding service volumes, statistics on a sum of service volumes of each of the users corresponding to the user identifiers as a roaming user and a non-roaming user; and
determining, according to the sum of service volumes of each of the users, the total service volume information of each of the one or more users having a sum of service volumes that meets the second condition parameter.

3. The method according to claim 2, wherein a data reporting parameter is carried in the data request message, and the data reporting parameter comprises any one or a combination of the following: a statistics-required service type parameter, a statistical time segment parameter, and the first condition parameter.

4. The method according to any one of claims 1 to 3, wherein the first condition parameter is a condition parameter that a service volume is greater than a first preset threshold, or a condition parameter that a service volume ranks before a first preset ranking in service volumes of all non-roaming users; and
the second condition parameter is a condition parameter that a sum of service volumes is greater than a second preset threshold, or a condition parameter that a sum of service volumes ranks before a second preset ranking in sums of service volumes of all users.

5. The method according to any one of claims 1 to 4, after the summing up service volumes based on the user identifiers and the corresponding service volumes to obtain total service volume information of each of one or more users having a sum of service volumes that meets a second condition parameter among the sums of service volumes that are corresponding to the user identifiers, further comprising:
generating a multi-dimensional service volume graph according to the total service volume information of each of one or more users having a sum of service volumes that meets the second condition parameter.

6. The method according to any one of claims 1 to 5, wherein sub online analytical processing OLAP servers are deployed in different geographic areas.

7. A method for online processing of data, comprising:
receiving a data request message sent by a central online analytical processing OLAP server, and obtaining a data reporting parameter associated with the data request message;
collecting, according to the data reporting parameter, statistics on service volumes of one or more roaming users and one or more non-roaming users to obtain user service data information, wherein the user service data information comprises service volume information of the roaming users and service volume information of one or more non-roaming users meeting a first condition parameter, and the service volume information comprises user identifiers and corresponding service volumes; and
sending the user service data information to the central OLAP server, so that the central OLAP server sums up service volumes based on the user identifiers and the corresponding service volumes to obtain total service volume information of each of one or more users having a sum of service volumes that meets a second condition parameter among the sums of service volumes that are corresponding to the user identifiers, wherein the total service volume information comprises the user identifier of each of the one or more users and a corresponding sum of service volumes.

8. The method according to claim 7, wherein before the collecting, according to the data reporting parameter, statistics on service volumes of one or more roaming users and one or more non-roaming users to obtain user service data information, further comprising:
receiving at least one piece of user service volume information sent by a deep packet inspection device, wherein each piece of the user service volume information comprises a user identifier of a user, a single service volume of the user, a home location identifier of the user, and an identifier of a geographic area in which the single service volume is generated; and
the collecting, according to the data reporting parameter, statistics on service volumes of one or more roaming users and one or more non-roaming users to obtain user service data information comprises:
if the home location identifier of the user is different from the identifier of the geographic area in which the single service volume is generated, determining that the user is a roaming user, and collecting, according to the data reporting parameter, statistics on single service volumes in all the user service volume information that comprises the user identifier to obtain service volume information of the roaming user; and
if the home location identifier of the user is the same as the identifier of the geographic area in which the single service volume is generated, determining that the user is a non-roaming user, and collecting, according to the data reporting parameter, statistics on single service volumes in all the user service volume information that comprises the user identifier to obtain a service volume of the non-roaming user; and determining, according to service volumes of all non-roaming users, service volume information of the one or more non-roaming users meeting the first condition parameter.

9. The method according to claim 7, wherein the data reporting parameter comprises any one or a combination of the following: a statistics-required service type parameter, a statistical time segment parameter, and the first condition parameter;
if the data reporting parameter comprises the statistics-required service type parameter, the collecting, according to the data reporting parameter, statistics on service volumes of one or more roaming users and one or more non-roaming users to obtain user service data information comprises: collecting statistics on service volumes that are corresponding to the statistics-required service type parameter and that are of the roaming users and the non-roaming users to obtain the user service data information; and
if the data reporting parameter comprises the statistical time segment parameter, the collecting, according to the data reporting parameter, statistics on service volumes of one or more roaming users and one or more non-roaming users to obtain user service data information comprises: collecting statistics on service volumes that are corresponding to the statistical time segment parameter and that are of the roaming users and the non-roaming users to obtain the user service data information.

10. The method according to any one of claims 7 to 9, wherein the first condition parameter is a condition parameter that a service volume is greater than a first preset threshold, or a condition parameter that a service volume ranks before a first preset ranking in service volumes of all non-roaming users; and
the second condition parameter is a condition parameter that a sum of service volumes is greater than a second preset threshold, or a condition parameter that a sum of service volumes ranks before a second preset ranking in sums of service volumes of all users.

11. The method according to any one of claims 7 to 10, wherein the obtaining a data reporting parameter associated with the data request message comprises:
obtaining, according to a predetermined mapping relationship between the data request message and the data reporting parameter, the data reporting parameter associated with the data request message; or,
if the data request message carries a data reporting parameter, the obtaining a data reporting parameter associated with the data request message comprises:
extracting the carried data reporting parameter from the data request message.

12. A central online analytical processing OLAP server, comprising:
a sending module, configured to send a data request message to at least one sub online analytical processing OLAP server;
a receiving module, configured to receive user service data information sent by the at least one sub OLAP server, wherein the user service data information comprises service volume information of one or more roaming users and service volume information of one or more non-roaming users meeting a first condition parameter, and the service volume information comprises user identifiers and corresponding service volumes; and
a processing module, configured to sum up service volumes based on the user identifiers and the corresponding service volumes to obtain total service volume information of each of one or more users having a sum of service volumes that meets a second condition parameter among the sums of service volumes that are corresponding to the user identifiers, wherein the total service volume information comprises the user identifier of each of the one or more users and a corresponding sum of service volumes.

13. The central OLAP server according to claim 12, wherein the processing module is specifically configured to:
collect, based on the user identifiers and the corresponding service volumes, statistics on a sum of service volumes of each of the users corresponding to the user identifiers as a roaming user and a non-roaming user; and
determine, according to the sum of service volumes of each of the users, the total service volume information of each of the one or more users having a sum of service volumes that meets the second condition parameter.

14. The central OLAP server according to claim 13, wherein the sending module is specifically configured to send a data request message that carries a data reporting parameter to the at least one sub OLAP server, wherein the data reporting parameter comprises any one or a combination of the following: a statistics-required service type parameter, a statistical time segment parameter, and the first condition parameter.

15. The central OLAP server according to any one of claims 12 to 14, wherein the processing module is further configured to: generate a multi-dimensional service volume graph according to the total service volume information of each of one or more users having a sum of service volumes that meets the second condition parameter.

16. A sub online analytical processing OLAP server, comprising:
a receiving module, configured to receive a data request message sent by a central online analytical processing OLAP server, and obtain a data reporting parameter associated with the data request message;
a processing module, configured to collect, according to the data reporting parameter, statistics on service volumes of one or more roaming users and one or more non-roaming users to obtain user service data information, wherein the user service data information comprises service volume information of the roaming users and service volume information of one or more non-roaming users meeting a first condition parameter, and the service volume information comprises user identifiers and corresponding service volumes; and
a sending module, configured to send the user service data information to the central OLAP server, so that the central OLAP server sums up service volumes based on the user identifiers and the corresponding service volumes to obtain total service volume information of each of one or more users having a sum of service volumes that meets a second condition parameter among the sums of service volumes that are corresponding to the user identifiers, wherein the total service volume information comprises the user identifier of each of the one or more users and a corresponding sum of service volumes.

17. The sub OLAP server according to claim 16, wherein the receiving module is further configured to:
receive at least one piece of user service volume information sent by a deep packet inspection device, wherein each piece of the user service volume information comprises a user identifier of a user, a single service volume of the user, a home location identifier of the user, and an identifier of a geographic area in which the single service volume is generated; and
the processing module is specifically configured to:
if the home location identifier of the user is different from the identifier of the geographic area in which the single service volume is generated, determine that the user is a roaming user, and collect, according to the data reporting parameter, statistics on single service volumes in all the user service volume information that comprises the user identifier to obtain service volume information of the roaming user; and
if the home location identifier of the user is the same as the identifier of the geographic area in which the single service volume is generated, determine that the user is a non-roaming user, and collect, according to the data reporting parameter, statistics on single service volumes in all the user service volume information that comprises the user identifier to obtain a service volume of the non-roaming user; and determine, according to service volumes of all non-roaming users, service volume information of the one or more non-roaming users meeting the first condition parameter.

18. The sub OLAP server according to claim 16, wherein the data reporting parameter comprises any one or a combination of the following: a statistics-required service type parameter, a statistical time segment parameter, and the first condition parameter; and
the processing module is specifically configured to: if the data reporting parameter comprises the statistics-required service type parameter, collect statistics on service volumes that are corresponding to the statistics-required service type parameter and that are of the roaming users and the non-roaming users to obtain user service data information, wherein the user service data information comprises service volume information of the roaming users and service volume information of one or more non-roaming users meeting the first condition parameter, and the service volume information comprises user identifiers and corresponding service volumes; or, is specifically configured to: if the data reporting parameter comprises the statistical time segment parameter, collect statistics on service volumes that are corresponding to the statistical time segment parameter and that are of the roaming users and the non-roaming users to obtain user service data information, wherein the user service data information comprises service volume information of the roaming users and service volume information of one or more non-roaming users meeting the first condition parameter, and the service volume information comprises user identifiers and corresponding service volumes.

19. The sub OLAP server according to any one of claims 16 to 18, wherein the receiving module is specifically configured to receive the data request message sent by the central online analytical processing OLAP server, and obtain, according to a predetermined mapping relationship between the data request message and the data reporting parameter, the data reporting parameter associated with the data request message; or, the receiving module is specifically configured to:
receive the data request message sent by the central online analytical processing OLAP server, and
if the data request message carries a data reporting parameter, extract the carried data reporting parameter from the data request message.

20. A system for online processing of data, comprising a central online analytical processing OLAP server and at least one sub online analytical processing OLAP server, wherein:
the central OLAP server is configured to: send a data request message to the at least one sub OLAP server; receive user service data information sent by the at least one sub OLAP server, wherein the user service data information comprises service volume information of one or more roaming users and service volume information of one or more non-roaming users meeting a first condition parameter, and the service volume information comprises user identifiers and corresponding service volumes; and sum up service volumes based on the user identifiers and the corresponding service volumes to obtain each of one or more users having a sum of service volumes that meets a second condition parameter among the sums of service volumes that are corresponding to the user identifiers, wherein the total service volume information comprises the user identifier of each of the one or more users and a corresponding sum of service volumes; and
the sub OLAP server is configured to: receive a data request message sent by the central OLAP server, and obtain a data reporting parameter corresponding to the data request message; collect, according to the data reporting parameter, statistics on service volumes of one or more roaming users and one or more non-roaming users to obtain user service data information; and send the user service data information to the central OLAP server, wherein the user service data information comprises service volume information of the roaming users and service volume information of one or more non-roaming users meeting the first condition parameter, and the service volume information comprises user identifiers and corresponding service volumes.

21. The system for online processing of data according to claim 20, wherein the central OLAP server is specifically configured to:
send a data request message to the at least one sub OLAP server; receive user service data information sent by the at least one sub OLAP server, wherein the user service data information comprises service volume information of one or more roaming users and service volume information of one or more non-roaming users meeting the first condition parameter, and the service volume information comprises user identifiers and corresponding service volumes;
collect, based on the user identifiers and the corresponding service volumes, statistics on a sum of service volumes of each of the users corresponding to the user identifiers as a roaming user and a non-roaming user; and
determine, according to the sum of service volumes of each of the users, the total service volume information of each of the one or more users having a sum of service volumes that meets the second condition parameter, wherein the total service volume information comprises the user identifier of each of the one or more users and a corresponding sum of service volumes.

22. The system for online processing of data according to claim 20 or 21, wherein the sub OLAP server is specifically configured to:
receive a data request message sent by the central OLAP server;
obtain, according to a predetermined mapping relationship between the data request message and the data reporting parameter, the data reporting parameter associated with the data request message; or,
if the data request message carries a data reporting parameter, extract the carried data reporting parameter from the data request message;
receive at least one piece of user service volume information sent by a deep packet inspection device, wherein each piece of the user service volume information comprises a user identifier of a user, a single service volume of the user, a home location identifier of the user, and an identifier of a geographic area in which the single service volume is generated;
if the home location identifier of the user is different from the identifier of the geographic area in which the single service volume is generated, determine that the user is a roaming user, and collect, according to the data reporting parameter, statistics on single service volumes in all the user service volume information that comprises the user identifier to obtain service volume information of the roaming user, wherein the service volume information comprises user identifiers and corresponding service volumes;
if the home location identifier of the user is the same as the identifier of the geographic area in which the single service volume is generated, determine that the user is a non-roaming user, and collect, according to the data reporting parameter, statistics on single service volumes in all the user service volume information that comprises the user identifier to obtain a service volume of the non-roaming user; and determine, according to service volumes of all non-roaming users, service volume information of the one or more non-roaming users meeting the first condition parameter, wherein the service volume information comprises user identifiers and corresponding service volumes; and
send the user service data information to the central OLAP server, so that the central OLAP server sums up service volumes based on the user identifiers and the corresponding service volumes to obtain total service volume information of a user corresponding to the user identifier and having a sum of service volumes that meets the second condition parameter, wherein the total service volume information comprises the user identifier of each of the one or more users and a corresponding sum of service volumes.

23. The system for online processing of data according to claim 20 or 21, wherein the sub OLAP server is specifically configured to:
receive a data request message sent by the central OLAP server;
obtain, according to a predetermined mapping relationship between the data request message and the data reporting parameter, the data reporting parameter associated with the data request message; or,
if the data request message carries a data reporting parameter, extract the carried data reporting parameter from the data request message; wherein
the data reporting parameter comprises any one or a combination of the following: a statistics-required service type parameter, a statistical time segment parameter, and the first condition parameter;
if the data reporting parameter comprises the statistics-required service type parameter, collect statistics on service volumes that are corresponding to the statistics-required service type parameter and that are of the roaming users and the non-roaming users to obtain user service data information, wherein the user service data information comprises service volume information of the roaming users and service volume information of one or more non-roaming users meeting the first condition parameter, and the service volume information comprises user identifiers and corresponding service volumes; or,
if the data reporting parameter comprises the statistical time segment parameter, collect statistics on service volumes that are corresponding to the statistical time segment parameter and that are of the roaming users and the non-roaming users to obtain user service data information, wherein the user service data information comprises service volume information of the roaming users and service volume information of one or more non-roaming users meeting the first condition parameter, and the service volume information comprises user identifiers and corresponding service volumes; and
send the user service data information to the central OLAP server, so that the central OLAP server sums up service volumes based on the user identifiers and the corresponding service volumes to obtain total service volume information of a user corresponding to the user identifier and having a sum of service volumes that meets the second condition parameter, wherein the total service volume information comprises the user identifier of each of the one or more users and a corresponding sum of service volumes.
